Europäisches Patentamt

European Patent Office

Office européen des brevets

(11) Publication number: **0 082 581**
A1

## (12) EUROPEAN PATENT APPLICATION

(21) Application number: 82201657.2

(22) Date of filing: 24.12.82

(51) Int. Cl.³: **A 23 C 9/123**
//A23C19/032, A23C13/16

(30) Priority: 29.12.81 NL 8105881

(43) Date of publication of application:
29.06.83 Bulletin 83/26

(84) Designated Contracting States:
AT BE CH DE FR GB IT LI NL SE

(71) Applicant: UNILEVER NV
Burgemeester s'Jacobplein 1 P.O. Box 760
NL-3000 DK Rotterdam(NL)

(84) Designated Contracting States:
BE CH DE FR IT LI NL SE AT

(71) Applicant: UNILEVER PLC
Unilever House Blackfriars P O Box 68
London EC4P 4BQ(GB)

(84) Designated Contracting States:
GB

(72) Inventor: Lelieveld, Hubertus L. M.
Spechtstraat 110
NL-3145 XM Maassluis(NL)

(74) Representative: van der Toorren, Johannes et al,
UNILEVER N.V. Patent Division Postbus 137
NL-3130 AC Vlaardingen(NL)

(54) Fermented milk product containing lactic acid bacteria, and process for the preparation thereof.

(57) The invention provides fermented milk products, e.g. yoghurt, with short chains of bacteria, obtainable by a process in which milk is treated with selected lactic acid producing bacteria and whereby the fermentation is carried out under conditions such that the long chains are broken into shorter chains, having an average chainlength in the range of 1 to 5 lactic acid bacteria, and thin threads having a thickness of 40-300 nm are formed which connect the short chains.

Applicant: Unilever N.V., Rotterdam

Title: "Fermented milk product containing lactic acid
bacteria, and process for the preparation thereof"

Applicant designates as inventor: H.L.M. Lelieveld

The present invention relates to a fermented milk product that contains lactic acid bacteria and to a process for the preparation thereof. Examples of fermented milk products are fermented milk, which can both be consumed as such and can be used as aqueous phase in the preparation of margarine, as well as yoghurt, quark, sour cream and buttermilk. The invention relates in particular to yoghurt and the preparation thereof.

In the preparation of yoghurt it is usual to add a yoghurt culture to whole milk, skim milk or milk with a decreased content of fat and to acidify the milk at a temperature of approximately 40°-45°C. Mostly a mixture of Streptococcus thermophilus and Lactobacillus bulgaricus is used. It is also possible to carry out the fermentation at a lower temperature, for example room temperature, i.e. at 15°-25°C. In order to increase the viscosity of the yoghurt, it is usual to increase the dry matter content of the starting milk by addition of whole or skim milk powder or by evaporation. Another possibility of making the yoghurt thicker is the use of stabilizers, which are mostly natural polysaccharides or derivatives thereof.

It has now been found that an increase in the viscosity of yoghurt can be obtained through special conditions. This has the advantage that from a certain starting mlk composition a thicker product can be obtained than with the usual process. On the other hand, a product with the usual viscosity and consistency can be prepared by applying the new process to a starting product with a dry matter content less high than usual and/or a content of stabilizers less than usual, as a result of which a raw material saving is obtained.

These special conditions consist, on the one hand, of the selection of certain cultures and, on the other hand of the selection of agitation of the milk product during the fermentation.

It was found, namely, that under certain conditions the chains of lactic acid bacteria are disrupted to shorter chains and/or single cells, which often remain connected with each other by threads. It is assumed that these threads are built up from biopolymers. In this connection polysaccharides or proteins spring to mind. The network formed in this way possibly contributes to the structure of the fermented milk product, causing this to have a higher viscosity than a conventional product in which said threads are not present.

Although the experimental results were found in first instance during the preparation of yoghurt, these are also applicable to other fermented milk products with a relatively high viscosity, such as quark, sour cream, pudding and suchlike.

The invention provides a fermented milk product that contains lactic acid bacteria, which occur in chains having an average chain length in the range of 1 to 5 lactic acid bacteria, which lactic acid bacteria can form biopolymers. In particular, at least part of the chains are connected with each other by threads of biopolymers, which threads preferably have a thickness of 40 to 300 nm, particularly of 70 to 200 nm.

Although the invention is embodied by the various kinds of products mentioned in the foregoing, the preferred embodiment is yoghurt, both stirred yoghurt and stand yoghurt, the latter being most preferred. To elucidate: by "stirred yoghurt" is meant a yoghurt that is packaged after the proteins have already coagulated, while by "stand yoghurt" is meant a yoghurt with which the coagulation of the proteins occurs in the package and thus the yoghurt structure develops in the package.

At the same time, the invention provides a process for the preparation of such a fermented milk product, which is characterized in that

(i)     a starting milk is inoculated with a culture of lactic acid bacteria which can form biopolymers,

(ii)    the inoculated milk is allowed to acidify until the pH has been decreased to a value not lower than 5.3, without coagulation occurring,

(iii)   the partly acidified but not yet coagulated milk is agitated in such a way that the chains of lactic acid bacteria are disrupted to shorter chains and/or single cells, during which threads are formed which connect the shorter chains and/or cells with each other,

(iv)    the milk treated according to (iii), if desired together with other ingredients such as cream, fruit preparations or not yet fermented milk, is filled into containers, and possibly

(v)     the acidification of the milk product is allowed to continue in the containers, whereby the milk coagulates and a fermented, coagulated milk product is formed.

In the case of the fermented product to be prepared being a yoghurt, preferably a yoghurt culture is applied.

Depending on the required structure of the final product, the starting material is milk having a dry matter content of 10-20% by weight. This dry matter content, which is increased with respect to that of normal milk, can be obtained by a) evaporation, b) concentration with the aid of membrane filtration or c) the addition of skim milk powder, whole milk powder, whey powder, casein or caseinate, whey proteins or concentrates of milk proteins, to whole milk, skim milk or milk having a decreased fat content.

A suitable embodiment is a process in which measures (ii) and (iii) are carried out simultaneously with the aid of continuous fermentation. Preferred is a continuous fermentation method in which, during the fermentation at a constant pH, the contents of the fermenting vessel are stirred in such a way that, as a result, the chains of cells are already disrupted. The thread formation can be influenced by fixing a certain speed of stirring, and geometry of the stirrer and the wall of the vessel. The process so described is particularly suitable for the preparation of a stand yoghurt. However, a stirred yoghurt can also be prepared with favourable results. In this case the indicated process should be modified in such a way that the product obtained after measures (i), (ii) and (iii) is subjected to further acidification, whereby the milk proteins coagulate before the milk product, possibly together with other ingredients, such as cream, fruit or fruit preparations or not yet fermented milk, is filled into containers.

A number of the measures are already known for the preparation of yoghurt. With this being borne in mind, the process for the preparation of stand yoghurt or of stirred yoghurt according to the invention can be indicated as follows.

A process for the preparation of stand yoghurt according to the invention, in which

(a) milk is inoculated with a culture of lactic acid
    bacteria,

(b) the inoculated milk, possibly after being partly fermented, is packaged in containers,

(c) the packaged milk is allowed to ferment at a temperature
    in the range of 15-50°C and thereafter cooled to a tem-
    perature below 10°C,

which is characterized in that the inoculated milk is allowed
to ferment, preferably continuously, until the pH has dropped
to a value not smaller than 5.3 (during which several
bacteria divisions have taken place and biopolymers have
already been formed) and during this fermentation, but at the
latest when said pH has been reached, the partly fermented
milk is agitated in such a way that the chains of lactic acid
bacteria are disrupted to shorter chains and/or single cells,
whereby threads are formed which connect the shorter chains
and/or the single cells with each other.

A process for the preparation of a stirred yoghurt according
to the invention, in which

(a) milk is inoculated with a culture of lactic acid
    bacteria,

(b) the inoculated milk is allowed to ferment at a temperature in the range of 15-50°C until the milk coagulates,

(c) the fermented and coagulated milk, possibly after cooling
    to below 10°C, is packaged in containers,

which is characterized in that the inoculated milk is allowed
to ferment, preferably continuously, until the pH has dropped
to a value not smaller than 5.3 (during which several
bacteria divisions have taken place and biopolymers have
already been formed) and during this fermentation, but at the
latest when said pH has been reached, the partly fermented
milk is agitated in such a way that the chains of lactic acid
bacteria are disrupted to shorter chains and/or single cells,

0082581

whereby threads are formed which connect the shorter chains and/or the single cells with each other, whereafter the milk treated in this manner is allowed to ferment further until coagulation has occurred.

The previously mentioned threads of biopolymers should not be confused with the slime threads which are easily visible macroscopically or with the aid of a normal light microscope with a multiplication factor of less than 300, which are present in thread-drawing acidified milk products, such as described by A.J. Kluyver in Ned. Tijdschrift Hyg. Microbiol. Serologie 3 (1929) 301-307. These easily visible slime threads consist of macromolecules present in the product which, although they are formed under the influence of the lactic acid bacteria, have nothing to do with the lactic acid bacteria being connected with each other. This known slime-forming also acts to increase viscosity, but this increased viscosity is very quickly decreased by mechanical treatment such as shaking and stirring.

The threads meant in this patent application are not visible under a normal light microscope and can only be made clearly visible with the aid of a scanning electronic microscope (SEM), for which samples of acidified milk, treated as indicated in the aforegoing in the description of the process according to the invention, are prepared as will be described hereinafter. In samples of acidified milk which are not mechanically treated according to the invention, no threads could be found which are visible with an SEM. This also applied to examined yoghurt products which are commercially available.

Naturally, organisms should be used which are capable of forming sufficient threads. Suitable organisms can be selected with the following methods.

The first selection criterion is to start from microorganisms which grow in chains and, during the growth in milk, produce a integument around their cell wall. Whether microorganisms can meet this selection criterion can be ascertained with the aid of a normal light or optical microscope.

Whether the second selection criterion is met, i.e. whether threads really develop, can be determined with the aid of an SEM, with which a sample prepared on laboratory scale is examined, which sample has been obtained during the acidification by stirring, under suitable conditions, a small amount of milk inoculated with the microorganisms.

The samples were made suitable for observation with the SEM according to a procedure indicated by Kalab and Harwalkar (Journal of Dairy Science 56 (1973) 835-842). Small amounts of yoghurt are fixed in a 1.5% glutaraldehyde solution for 1 hour at room temperature and cut into sections. After the fixation, the gel sections are washed with distilled water. Herewith the water-soluble substances are removed, particularly lactose, which would otherwise interfere with the observation of the relevant microstructure. The excess water is removed with filter paper and the specimens are quickly frozen in melting nitrogen ("nitrogen slush"). Thereafter the specimens are freeze-dried, whereby a rise in temperature to above -70°C before they are dry is avoided. The specimens are attached with a conductive adhesive on to a metal specimen holder and covered with a gold-platinum layer about 50 nm thick. Photos in a magnification varying from 2000 to 5000 x were taken with an SEM with the aid of a secondary electronic picture.

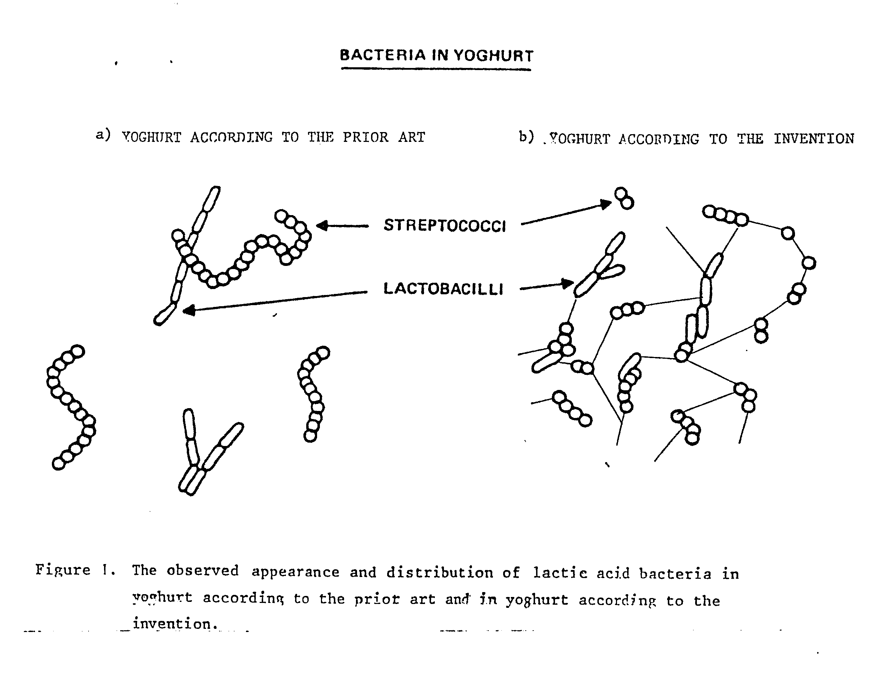

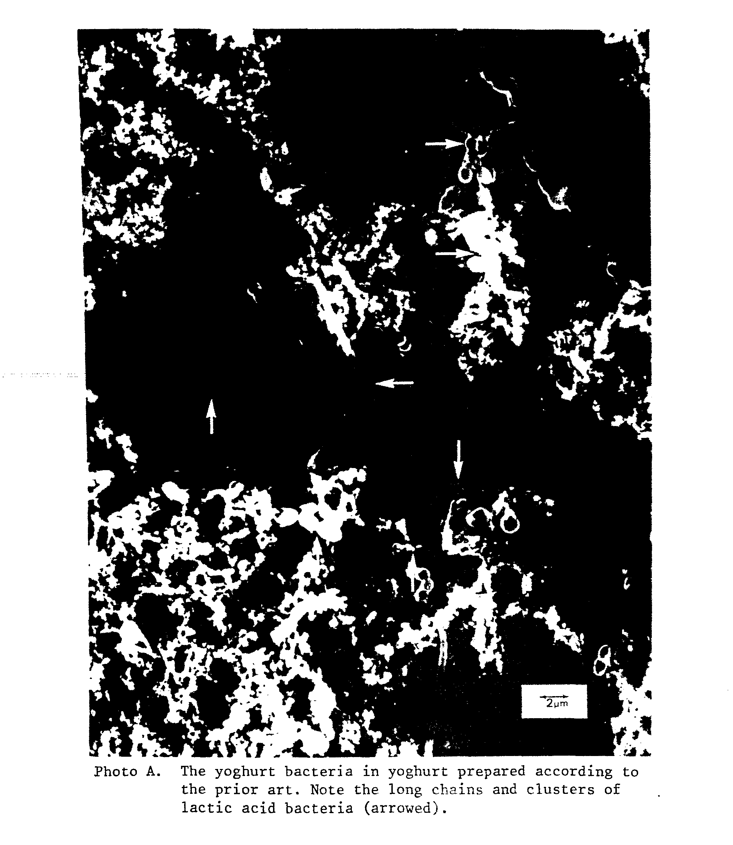

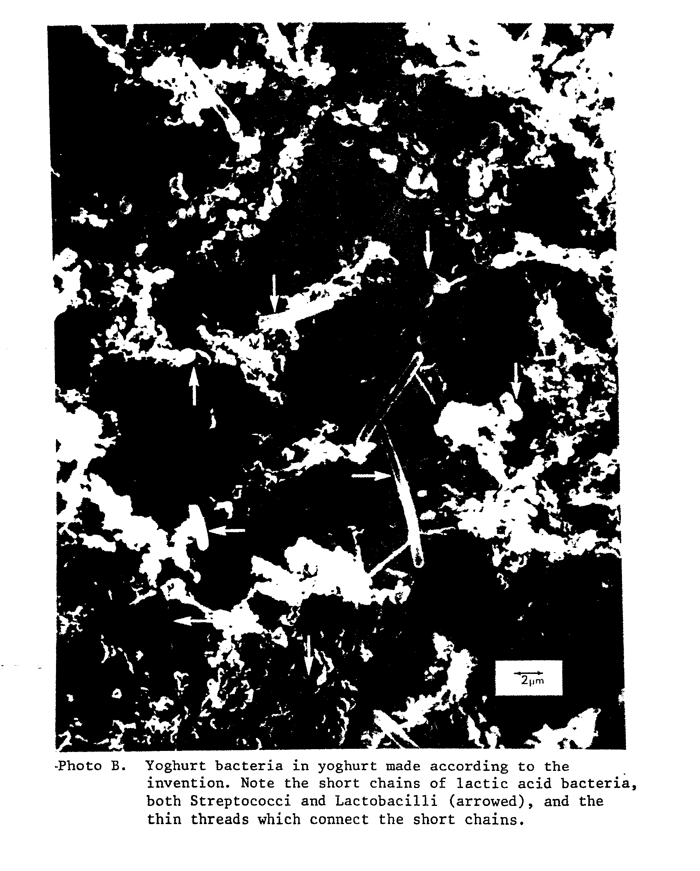

The differences between the yoghurts prepared according to the invention and according to the normal processes can be further elucidated with Figure 1 and with Photos A. and B.

From the photos it appears that the threads discussed in the foregoing, which develop in products according to the invention, have a thickness of about 0.1-0.2 micron or about 100-200 nm. However, threads having a larger or smaller thickness have been found.

The speed at which the shear forces become so great that the biopolymer threads break, or remain so small that the bacteria are not separated from each other, depends partly on the culture used. It can, however, be determined in a relatively easy though laborious manner through a few tests in which the samples are examined with the aid of an SEM.

The invention will be explained with the following example.

Example

As inoculation culture, a mixture of Lactobacillus bulgaricus and Streptococcus thermophilus was used of which it had been determined beforehand that, under the conditions of use, this was capable of being drawn to threads. 1% of the culture, fully ripened in stationary pasteurised milk at 43°C, was inoculated into milk having a fat content of 1% to which 1% of skim milk powder had been added. The fermentation took place at 43 - 2°C in a reactor provided with a stirrer and having the following dimensions.

The stirring speed was 300 revolutions per minute (tip speed 3.8 m/s).

The stirring was stopped when a pH of 5.5 had been reached. The cell density was then about 50% of the final concentration.

Thereafter the fermented milk was conveyed to containers which were kept at about 43°C for completion of the yoghurt formation (1.5 h). With the aid of an SEM, photos were taken of this yoghurt, of which Photo B is an example.

**0082581**

## CLAIMS

1. Fermented milk product containing lactic acid bacteria which can form biopolymers, characterized in that the lactic acid bacteria occur in chains having an average chain length in the range of 1 to 5 lactic acid bacteria.

2. Fermented milk product according to claim 1, characterized in that at least part of the chains are connected with each other by threads of biopolymers.

3. Fermented milk product according to claim 2, characterized in that the threads have a thickness of 40 to 300 nm.

4. Fermented milk product according to claim 3, characterized in that the threads have a thickness of 70 to 200 nm.

5. Fermented milk product according to one of the claims 1-4, characterized in that it is yoghurt.

6. Fermented milk product according to claim 5, characterized in that it is a stand yoghurt which has been obtained by carrying out the last phase of the acidification of the milk product, during which coagulation occurs, in the package.

7. A process for the preparation of a fermented milk product according to one of the claims 1-6, characterized in that
(i) a starting milk is inoculated with a culture of lactic acid bacteria which can form biopolymers,
(ii) the inoculated milk is allowed to acidify until the pH has decreased to a value not lower than 5.3 without coagulation occurring,
(iii) the partly acidified but not yet coagulated milk is agitated in such a way that the chains of lactic acid bacteria are disrupted to shorter chains and/or single cells, during which threads are formed which connect the shorter chains and/or single cells with each other,

(iv) the milk treated according to (iii), if desired together with other ingredients such as cream, fruit preparations or not yet fermented milk, is filled into containers, and possibly

(v) the acidification of the milk product is allowed to continue in the containers, whereby the milk coagulates and a fermented, coagulated milk product is formed.

8. A process according to claim 7, characterized in that a yoghurt culture is used as lactic acid bacteria culture.

9. A process according to claim 7, characterized in that a starting milk having an increased dry matter content is used, this dry matter content being in the range of 10 to 20% by weight.

10. A process according to claim 7, characterized in that the measures (ii) and (iii) are carried out simultaneously with the aid of continuous fermentation.

11. A process according to one or more of the claims 7 to 10 for the preparation of a stand yoghurt, in which

(a) milk is inoculated with a culture of lactic acid bacteria which can form biopolymers,

(b) the inoculated milk, possibly after being partly fermented, is packaged in containers,

(c) the packaged milk is allowed to ferment at a temperature in the range of 15-50°C and thereafter cooled to a temperature below 10°C,

characterized in that the inoculated milk is allowed to ferment, preferably continuously, until the pH has dropped to a value not smaller than 5.3 (during which several bacteria divisions have taken place and biopolymers have already been formed) and during this fermentation, but at the latest when said pH has been reached, the partly fermented milk is agitated in such a way that the chains of lactic acid bacteria are disrupted to shorter chains and/or single cells, whereby threads are formed which connect the shorter chains and/or the single cells with each other.

12. Modification of a process according to one or more of the claims 7 to 10, characterized in that the product obtained obtained after measures (i), (ii) and (iii) is subjected to a further acidification, whereby the milk proteins coagulate, before the milk product, possibly together with other ingredients such as cream, fruit or not yet fermented milk, is filled into containers.

13. A process according to claim 12 for the preparation of a stirred yoghurt, in which
   (a) milk is inoculated with a culture of lactic acid bacteria which can form biopolymers,
   (b) the inoculated milk is allowed to ferment at a temperature in the range of 15-50°C until the milk coagulates,
   (c) the fermented and coagulated milk, possibly after cooling below 10°C, is packaged in containers,
   characterized in that the inoculated milk is allowed to ferment, preferably continuously, until the pH has dropped to a value not smaller than 5.3 (during which several bacteria divisions have taken place and biopolymers have already been formed) and during this fermentation, but at the latest when said pH has been reached, the partly fermented milk is agitated in such a way that the chains of lactic acid bacteria are disrupted to shorter chains and/or single

0082581

cells, whereby threads are formed which connect the shorter chains and/or the single cells with each other, whereafter the milk treated in this manner is allowed to ferment further until coagulation has occurred.

**BACTERIA IN YOGHURT**

a) YOGHURT ACCORDING TO THE PRIOR ART        b) YOGHURT ACCORDING TO THE INVENTION

STREPTOCOCCI

LACTOBACILLI

Figure 1.  The observed appearance and distribution of lactic acid bacteria in yoghurt according to the prior art and in yoghurt according to the invention.

Photo A.  The yoghurt bacteria in yoghurt prepared according to the prior art. Note the long chains and clusters of lactic acid bacteria (arrowed).

Photo B. Yoghurt bacteria in yoghurt made according to the invention. Note the short chains of lactic acid bacteria, both Streptococci and Lactobacilli (arrowed), and the thin threads which connect the short chains.

## European Patent Office

## EUROPEAN SEARCH REPORT

Application number

EP 82 20 1657

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | CH-A- 483 798 (RODOPA) <br><br> *Claim; sub-claims 4,5; example* | 1,5,6, 7,8,10 ,11 | A 23 C 9/123// <br> A 23 C 19/032 <br> A 23 C 13/16 |
| X | GB-A-1 398 799 (NIZO) <br><br> *Claims 1-4; page 3, lines 90-125; examples I-IV* | 1,8,11 ,12,13 | |
| X | DE-A-2 006 894 (R.SCHULER) <br><br> *Claims 1-5; examples 1,2* | 1,5-8, 10-13 | |
| X | AU-B- 472 501 (AUSTRALIAN DAIRY CO.) <br> *Claims 1-7; pages 7-9; figures 1,10* | 1,7-10 ,12-13 | |
| | | | TECHNICAL FIELDS SEARCHED (Int. Cl. ³) |
| A | US-A-2 832 687 (C.LANE et al.) <br> *Claim 1; column 2, line 35 - column 3, line 16* | 1 | A 23 C |
| A | FR-A-1 166 899 (B.DESOUCHES et al.) <br> *Abstract* | 1 | |

The present search report has been drawn up for all claims

| Place of search | Date of completion of the search | Examiner |
|---|---|---|
| THE HAGUE | 29-03-1983 | DESMEDT G.R.A. |